# EUROPEAN PATENT SPECIFICATION

(11) **EP 1 803 546 B1**
(45) Date of publication and mention of the grant of the patent: **06.04.2011**
(21) Application number: 06027035.2
(22) Date of filing: 28.12.2006
(51) Int. Cl.: B29D 30/30, B29D 30/60

(54) **Manufacturing method of rubber member for tire**
Verfahren zur Herstellung von Gummibestandteilen für Luftreifen
Procédé pour la fabrication d'un élément en caoutchouc pour pneumatique

(30) Priority: 29.12.2005 JP 2005380591
(43) Date of publication of application: 04.07.2007
(73) Proprietor: SUMITOMO RUBBER INDUSTRIES, LTD., Hyogo-ken (JP)
(72) Inventor: Miki, Yojiro, c/o Sumitomo Rubber Industries, Ltd., Kobe-shi Hyogo-ken (JP); Yamamori, Shuichi, c/o Sumitomo Rubber Ind., Ltd., Kobe-shi Hyogo-ken (JP)
(74) Representative: Manitz, Finsterwald & Partner GbR

(56) References cited:
- EP-A- 0 712 739
- EP-A- 1 020 284
- EP-A- 1 186 401
- EP-A- 1 629 964
- JP-A- 2002 046 194
- US-A- 3 223 572
- US-A- 4 990 203

## Description

### Background Of The Invention

### Field of the Invention

The present invention relates to a strip wind construction method of forming a rubber member for a tire by spirally winding a rubber strip, and more particularly to a manufacturing method of a rubber member for a tire in accordance with the preamble of claim 1, which can reduce a air remnant in the rubber member. Such a method is disclosed in EP 1 020 284 A2.

Another manufacturing method of a rubber member is disclosed in EP 1 629 964 A2, which is only prior art pursuant to Art. 54(3) EPC.

### Description of the Related Art

There has been considered to form a rubber member in each of positions of tire, such as a tread rubber, a side wall rubber or the like by spirally winding a rubber strip made of a material corresponding to a demand characteristic of the rubber member. By the strip wind construction method , a mouth piece of a nozzle and a labor hour of a management can be reduced in comparison with an conventional extrusion molding method of continuously extruding from a mouth piece in a predetermined finish cross sectional shape. Further, it is possible to use a compact rubber extruding machine, and it is possible to achieve a large item small scale production. As mentioned above, the strip wind construction method (STW method) can improve a productivity.

However, in the STW method mentioned above, since the rubber strip is spirally wound, an air reservoir tends to be generated due to a step in a side edge of the rubber strip or the like. This is because the adjacent rubber strips are wound astride the step in the side edge of the previously wound rubber strip. There is an increased risk that the air reservoir is generated between a wound body such as a drum or the like, and a rubber layer spirally wound in an outer side in a radial direction thereof, or between the inner and outer rubber layers in the radial direction in comparison with the conventional one mouth method. Accordingly, Japanese Published patent application 2000-254980 proposes a rubber strip provided with thin lug portions in both side edges, in a rubber strip.

In the proposed structure mentioned above, since both the side edges are provided with the thin step, in the case of forming a diagonal side edge portion, a thickness of an edge step is reduced in comparison with a thickness of a base portion. And an error in an outer peripheral edge between a finish cross sectional shape and an outline shape is reduced. Further, it is possible to achieve an effect to reduce a winding number by the thick base portion. However, it becomes necessary to hold specialized mouth pieces for the extruding machine, and a productivity tends to be lowered.

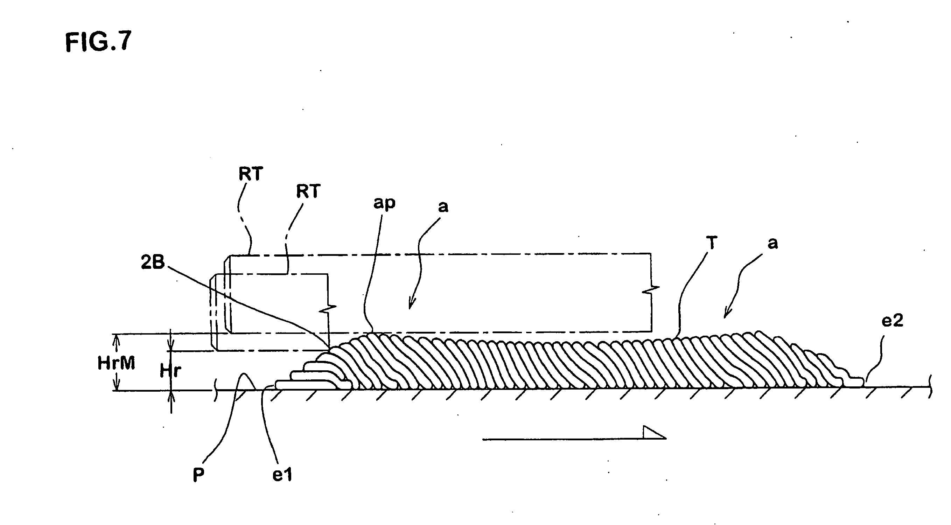

On the other hand, in the STW method, it is necessary to expel the air between the layers so as to prevent the air reservoir from being generated. Accordingly, a degree of adhesion is increased by pressing a roller to the spirally wound rubber layer or a previously wound rubber layer. Therefore, there is employed a straight bar-shaped pressing roller RT having a length more than a length of the rubber member to be formed or a half length, for example, as shown in Fig. 7. The pressing roller RT moves close to and away from a wound body P while keeping a parallel state.

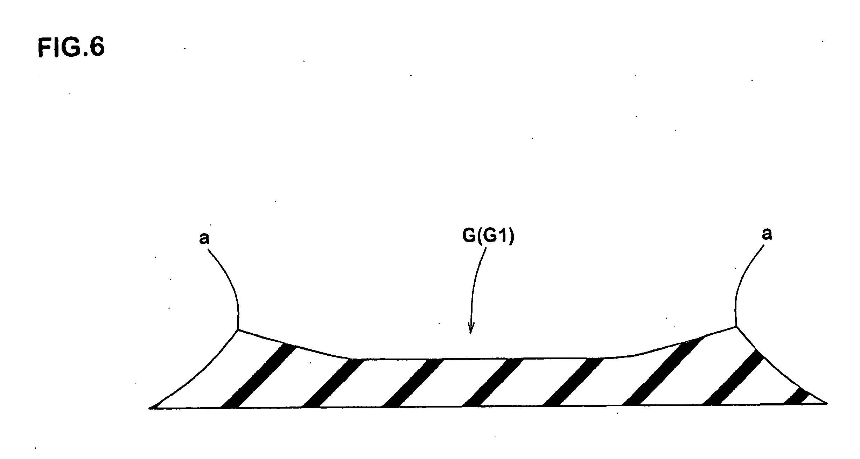

However, there is a case to form a tread rubber having bulge portions a protruding to an outer side in a radial direction in both side shoulder portions, for example, as shown in Fig. 6, by the STW method. In the case that a rubber strip T is spirally wound from a leading position e1 to a trailing position e2 as shown in Fig. 7, a thickness is increased comparatively rapidly in the winding start position e1 side for forming a buttress portion 2B of a tread rubber G1. At this time, a height Hr of the pressing roller RT is increased following to it. After the pressing roller RT comes to a highest position in the radial direction at a peak point HrM corresponding to a apex ap of the bulge portion a, it is impossible to follow the reduction of the thickness of the rubber member G. It is hard to press the outer surface of the rubber member G thereafter. In other words, the subsequent pressing is interrupted at the apex ap of the first bulge portion a. Therefore, it is hard to form the rubber member G having a good precision with no air reservoir, and a high degree of adhesion between the rubber strips. The pressing roller RT actually moving only close to or away from (moving in a radial direction) is illustrated by being shifted in an axial direction for clearly showing an operating state, in the drawings attached to the specification of the present invention.

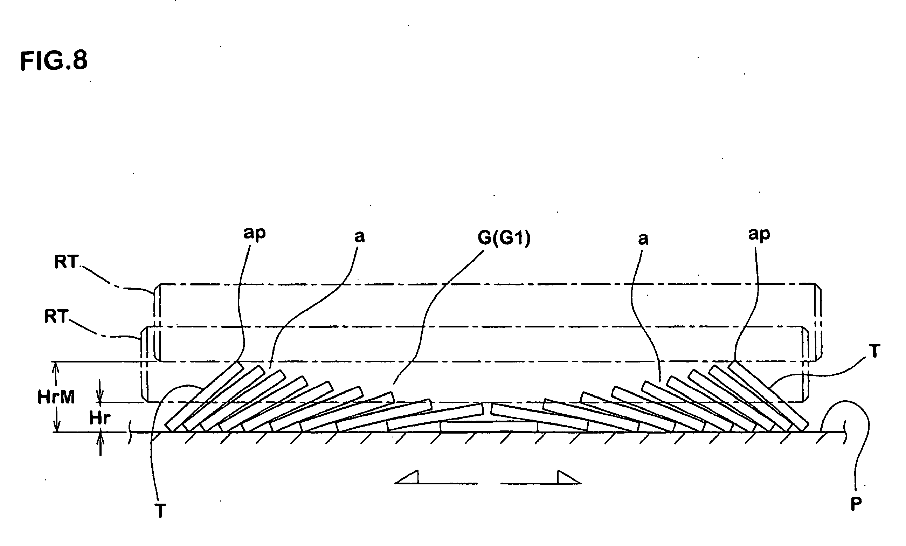

Further, Fig. 8 shows a case that a tread rubber G1 constituted by one rubber layer is formed by spirally winding a rubber strips T and T in both sides from a center position of a wound body such as a former or the like. A roller height Hr of the pressing roller RT is increased little by little in a small thickness portion of a center region and portions having a gradually increased thickness in both sides, and it is possible to efficiently press the rubber member G. Admitting that, since the pressing roller RT can not move down over the roller height HrM in a shoulder region which gets over the apex ap (the roller height HrM) of the bulge portions a in both sides outside in a tire axial direction, a pressing effect is inferior to the pressing operation of the shoulder portion.

### Brief Summary Of The Invention

As a result of making a study of the formation of the rubber member with a high precision and with no air reservoir in accordance with the STW method, there is conceived that it is preferable to execute a pressing as uniform as possible and set the thickness about a half height of each of the rubber members G without making the thickness too large, in order to obtain a preferable rubber member. Accordingly, it is possible to effectively transmit the pressing force by the pressing roller RT to an entire thickness of each of the layers. Further, there is conceived that it is preferable to spirally wind an entire length by dividing in a length direction in place of continuously winding the entire length in the tire axial direction.

Accordingly, an object of the present invention is to provide a manufacturing method of a rubber member for a tire which can reduce an air reservoir and can improve a junction between the rubber strip even in the case of using a rubber strip having a rectangular cross section in an STW method.

This object is met by a method comprising the features of claim 1.

Preferred embodiments of the invention are defined in the dependent claims.

In accordance with the present invention, there is provided a manufacturing method of a rubber member for a tire constituted by a plurality of rubber layers overlapping in inner and outer sides in a radial direction, by spirally winding a ribbon-shaped unvulcanized rubber strip around a cylindrical wound body while moving in an axial direction, wherein the rubber member includes an inner first layer and a second layer. The first layer is formed by spirally winding the rubber strip from a starting point corresponding to a side edge in an axial direction, in a half region between the center position and an side edge in a tire axial direction of a winding region. And the second layer is formed by folding back from the center position to the starting point of the first layer. The center position and the side edges are set at a line-symmetrical position with respect to the center position.

A compounded rubber of a plurality of rubber layers can be identical. The structure is made such that the first layer is wound from a reference point that is the starting point corresponding to the outer edge in the tire axial direction in the winding region to a reference point that is the center position, and the second layer is formed by being folded back at the center position so as to be wound to the outer edge in the tire axial direction. Further, the structure can be made such that the rubber member is a tread rubber, the first layer is constituted by a rubber layer having a flat thickness, and second layer is spirally wound in such a shape as to apply a similar thickness change to a shape of the tread rubber member in a green tire.

The rubber strip can be pressed by using a pressing roller which is movable close to and away from the wound body in parallel and is in a long straight rod shape having a uniform diameter, at a time of winding.

As mentioned above, in the present invention, in the STW method, the rubber strip is symmetrically reciprocated in the half region between the center position of the wound body and the outer edge in the tire axial direction of the wound body. Accordingly, the first layer and the second layer are formed in the inner and outer sides. Therefore, even in the case of using the pressing roller above described, it is easy to press as an approximately line-symmetrical shape at the center position. Accordingly, it is possible to obtain the rubber member which is good in a shape balance. Further, since the rubber member comprises the first and second layer, the first layer in the inner side in the radial direction can be efficiently pressed over an entire thickness. It is possible to suppress generation of an air reservoir on the basis of an air vent. Further, it is possible to improve an adhesion between the rubber strips, and is possible to mold the rubber member which is good in a uniformity, a durability and a dimensional precision.

Since the rubber strip is pressed in the long straight rod shape having the uniform diameter and by using the pressing roller RT which is movable close to or away from the wound body in parallel, it is possible to make a surface shape of the rubber member after being spirally wound smoother in comparison with the case of being pressed by a thin disc shaped roller, and it is possible to improve a quality of the rubber member by uniformizing the press-down force.

### Brief Description Of The Several Views Of The Drawing

Fig. 1 is a cross sectional view of a tire showing an embodiment in accordance with the present invention;
Fig. 2 is a cross sectional view of a rubber member exemplifying a first layer and a second layer in the case that the rubber member in accordance with the present invention is a tread rubber;
Fig. 3 is a cross sectional view exemplifying only the first layer in the case shown in Fig. 2;
Fig. 4A is a perspective view exemplifying a forming apparatus;
Fig. 4B is a perspective view exemplifying a rubber strip;
Fig. 5 is a cross sectional view exemplifying further the other embodiment;
Fig. 6 is a cross sectional view exemplifying a cross section of a tread rubber in accordance with a conventional extrusion;
Fig. 7 is a cross sectional view exemplifying a case that a tread rubber is formed by a conventional one-layer winding; and
Fig. 8 is a cross sectional view exemplifying a case that a tread rubber is manufactured by one-layer winding toward both sides from a starting point corresponding to a center position of the rubber member.

### Detailed Description Of The Invention

A description will be given of an embodiment in accordance with the present invention with reference to the accompanying drawings.

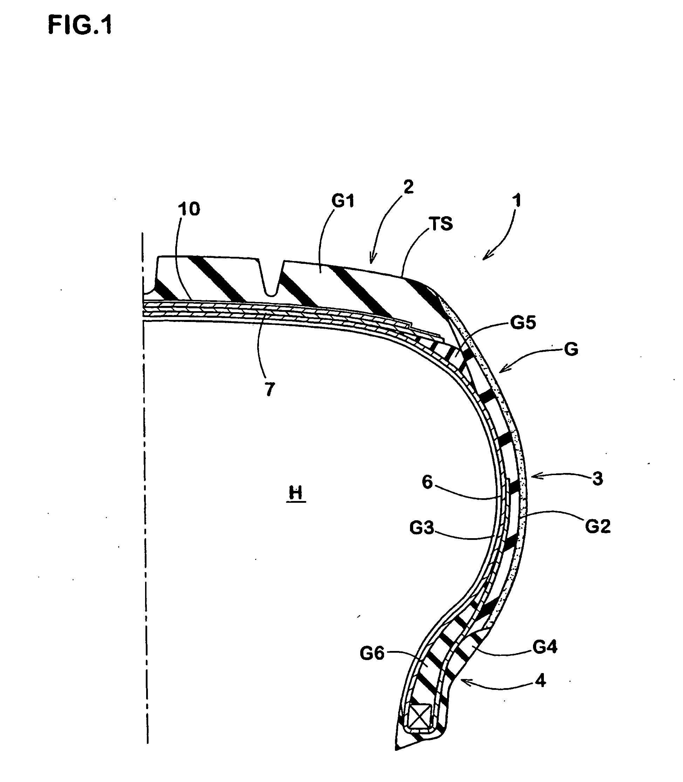

Fig. 1 exemplifies a case that a pneumatic tire is constituted by a radial tire for a passenger car. A tire 1 is provided with plural kinds of tire rubber members G, for example, a tread rubber G1 arranged in a tread portion 2 and forming a ground surface. The tread rubber G1 is formed approximately line-symmetrically in an axial direction around a tire equator. A description will be given of an example of a manufacturing method in accordance with the present invention by exemplifying a case of being used for forming the tread rubber G1.

However, the present invention can be adopted to a side wall rubber G2 arranged in a side wall portion 3 and forming a tire outer surface, an inner liner rubber G3 arranged in an inner side of a carcass 6 and surrounding a tire inner cavity H, a clinch rubber G4 arranged in a bead portion 4 and preventing a rim displacement, a belt cushion rubber G5 arranged in both ends of a belt 7 and between the both ends and the carcass 6 and protecting an outer end of the belt, and the like. Further, it is possible to include a bead apex rubber G6 extending to an outer side in a radial direction from a bead core 5 of the bead portion 4 as the rubber member G. In this case, in the present embodiment, a band 10 is arranged in an upper surface in a radial direction of the belt 7. The band 10 is formed by spirally winding a band-like ply formed by embedding a plurality of cords in a topping rubber, for example, around an entire surface of an outer periphery of the belt 7, and preferably at a uniform thickness. Accordingly, it is possible to prevent the belt 7 from lifting up, and a tread reinforcing layer is structured in cooperation with the belt 7.

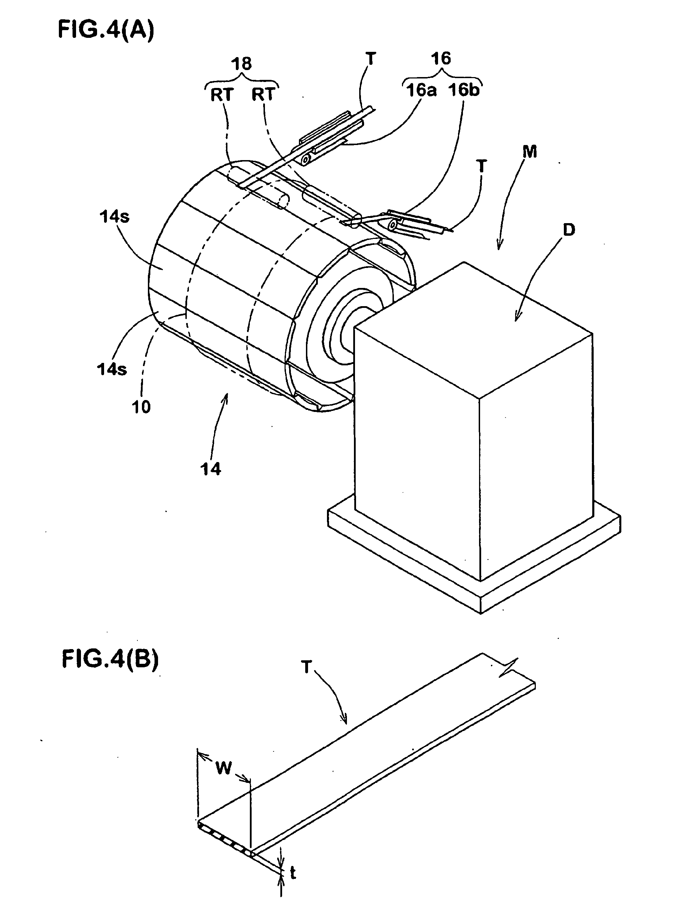

Fig. 4A exemplifies a forming apparatus M which can be used for a manufacturing method in accordance with the present invention. The forming apparatus M is provided with a base table D, a cylindrical forming former 14 rotatably supported to the base table D, and a strip delivery apparatus 16 capable of supplying the rubber strip T to the former 14, for example, constituted by first and second applicators 16a and 16b. Further, the forming apparatus M includes a pressing apparatus 18 constituted by long rod-shaped first and second pressing rollers RT and RT extending in an axial direction of the former 14. In the former 14, a plurality of segments 14s construct an outer peripheral surface 14A. Further, the segments 14s can move forward and backward in a tire radial direction by an expansion and contraction mechanism (not shown)in an inner portion so as to be capable of the expanding and contracting. It is possible to detach the wound rubber member G in accordance with the contraction.

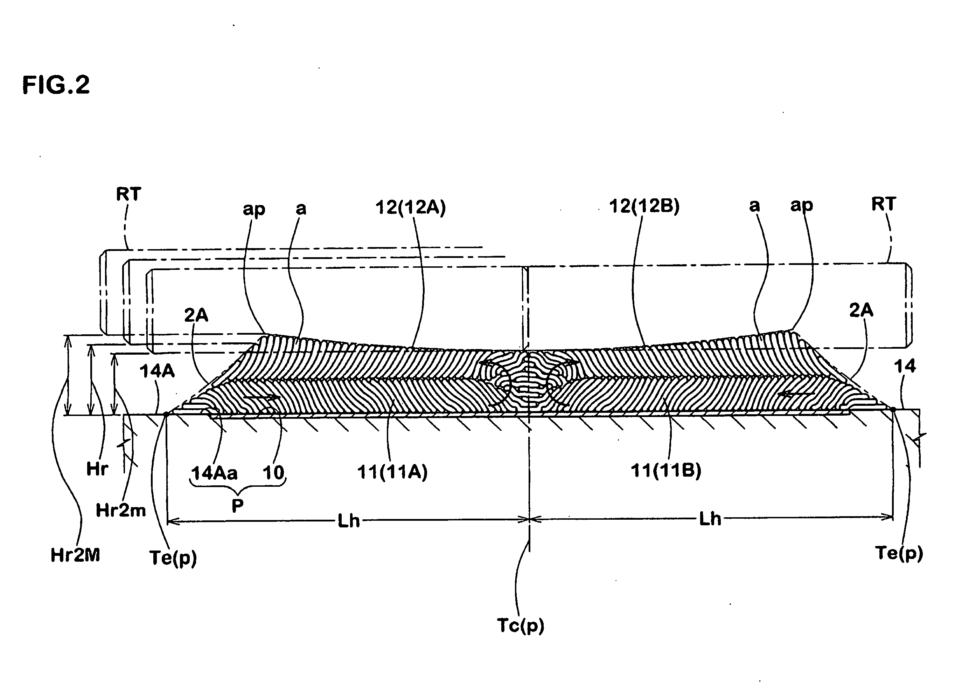

Further, in the present embodiment, the wound body P (shown in Fig. 2) around which the rubber strip T forming the tread rubber G1 is wound is constituted by the band 10 wound around an outer peripheral surface 14A of the former 14, and a protruding portion 14Aa of the former 14 protruding from the band 10.

In this case, the band 10 is preferably fitted to a concavity provided in the outer peripheral surface 14A of the former 14. Accordingly, the band 10 becomes flush with the outer peripheral surface 14A corresponding to the protruding portion 14Aa. Further, a surface-finish is applied to the protruding portion 14Aa for increasing an adhesion property with the rubber strip T and preventing a displacement of a winding start end so as to smoothen a winding work.

The pressing roller RT is formed in a straight rod shape of a uniform diameter at a length of a half or more than a half of the wound body P, in the present embodiment. Further, facing inner ends of the respective pressing rollers RT are arranged at a center position Tc of the wound body P so as to be coincided in a circumferential direction. Further, the pressing roller RT constitutes a part of a pressing apparatus (not shown) which controls an actuation of the pressing roller RT. The pressing roller RT moves close to and away from the former 14 while keeping a parallel state to the former 14 and without moving in an axial direction. It is possible to align thicknesses of the wound rubber members G by the close moving, the air vent is achieved by the pressing, and it is possible to preferably press the rubber strip T uniformly so as to connect each other. In this case, the pressing roller RT is positioned in a downstream side of each of the applicators 16a,16b and can press the rubber member G formed by winding the rubber strip T fed from the applicators 16a, 16b.

The rubber strip T is formed in a ribbon shape made of an unvulcanized rubber as exemplified in Fig. 4B. The rubber strip T is structured such that a thickness t is between 0.3 and 3.0 mm, preferably a width W is between 5 and 50 mm. In the case that the width W is less than 5 mm, or in the case that the thickness t is less than 0.3 mm, a lot of winding number is necessary at a time of finishing a predetermined tread cross sectional shape, and a productivity is lowered. On the contrary, in the case that the width W is more than 50 mm or in the case that the thickness t is more than 3.0 mm, there is a tendency that it is hard to form a delicate cross sectional shape of the tread rubber.

Further, taking into consideration factors such as a low heat generation property, a grip performance, an abrasion resistance service life and the like as the tread rubber G1, a rubber composition, JISA hardness, a complex elastic modulus (E*) and a tangent of the loss angle (tan δ) are selected in an optimum manner. In this case, a silica can be employed as a rubber filler in addition to the carbon black. The silica compounded rubber in which the silica is compounded can improve a wet grip performance, and can reduce a rolling resistance on a dry road surface. However, an electric resistance is increased. Accordingly, in order to suppress the increase of the electric resistance, it is preferable to set a conductive coat on the rubber strip T, for example, at least one surface thereof so as to make a rim conductive from a tread ground surface TS.

A half region Lh is defined as a portion between a center position Tc of the wound body P, and one outer edge Te in the tire axial direction of a winding region around which the rubber strip T is wound (a forming region of the winding body). Further, the center position Tc or each of the outer edges Te is defined as reference positions p and p. Actually, "center position Tc" and "outer edge Te" include "vicinity" allowing a length in the tire axial direction equal to or less than about 5% of the half region, from each of the positions, in this specification.

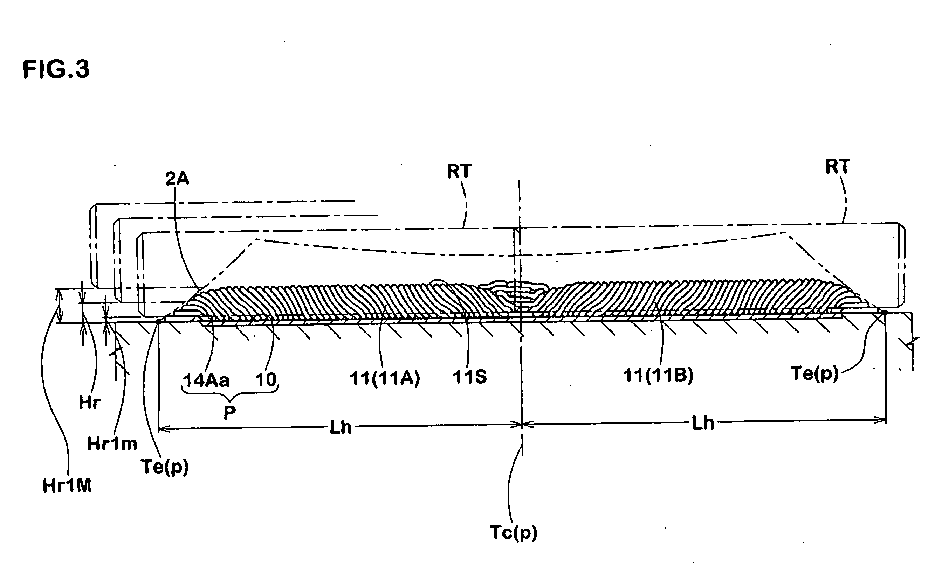

In the present invention, the tread rubber G1 is structured such that the rubber strip T is spirally wound from a starting point corresponding to one reference position p constituted by the center position Tc , to another reference position p constituted by the outer edge Te in the axial direction, as shown in Fig. 3. An inner first layer 11 is formed by winding in the axial direction. The center position Tc of the "wound body 14" means the center position of the "winding region" where the tread rubber G1 is formed.

Next, a second layer 12 is formed by folding back from the starting point of the corresponding to each of the other reference positions(the starting position of the first layer 11) to the other in the axial direction.

Further, a description will be given of a case shown in Figs. 2 and 3. It is wound inward in the axial direction from the starting point corresponding to the reference point p of the outer edge Te to the reference point p of the center position Tc. A first layer 11A in one of the half regions Lh, and a first layer 11B (called as a first layer 11 in conjunction) in the other are formed in both sides of the center position Tc, by respectively setting the outer edges Te in both sides to the starting points. The first layer 11A and the other first layer 11B are approximately line-symmetrical around the center position Tc. In this case, the respective first layers 11 in both sides are folded back at the center position Tc. Near the center position Tc, there tends to be generated a portion where the rubber strips T of the first layer 11 and the second layer 12 intersect, that is, a portion where the winding is asymmetrically and turbulent. In the present invention, the winding including the turbulent portion is called as "approximately line-symmetrical" or "line-symmetrical".

Further, each of the first layers 11 in both sides is formed in a flat shape in which a rubber height is almost constant in an upper surface 11S. Accordingly, the roller height Hr of the pressing roller RT, which is minimum value Hr1m in the starting point, is increased in accordance with forming the outer surface of the buttress portion 2A(the upper side of the side wall portion 2). After that, the pressing roller RT can press the rubber strip continuously wound while keeping the state of a rubber height Hr1M of the first layer 11. The first layer 11 of the rubber height Hr1M becomes approximately line-symmetrical around the center position Tc. Even when the upper surface 11S is swell (expanding shape) in which the rubber height Ht is increased toward the center position Tc, the pressing roller RT can follow.

Further, the second layers 12A and 12B (called as the second layer 12 in conjunction) are formed on the first layers 11A and 11B folding back the rubber strip T at the center position Tc toward the other reference point p, that is, the outer edge Te after forming the turbulent and asymmetrical portion in which the rubber strips T overlap, as mentioned above, at the fold-back portion. The second layer 12 is relatively thin in the center region, and the height is increased little by little toward the outer edge Te. Accordingly, there is formed the bulge portion a in which the upper surface 12S bulges gradually to each of the shoulder portion side, and there is formed a concave shape in which the center region is depressed.

Accordingly, in the pressing roller RT mentioned above, the starting point in the second layer 12 exists in the center position Tc, as shown in Fig. 2. The rubber thickness of the portion is minimum in the second layer 12. Therefore, the roller height Hr comes to the minimum value Hr2m. After this state is continued, the height Hr of the pressing roller RT is increased in the bulge portion a together with the increase of the rubber thickness. The apex ap of the bulge portion a comes to the maximum height Hr2M. After passing through the apex ap, it comes to a buttress portion 2A of the second layer 12 which can not be pressed by the pressing roller RT, since the pressing roller RT can not move down. Because the portion 2A is small, it is possible to be left for pressing at a time of forming a metal mold, or it is possible to press by independently using a press roller (not shown) having a small width.

As mentioned above, the first layer 11 has a half thickness and a pressing effect is larger, in comparison with the structure in which the entire thickness is formed by one spiral winding. Accordingly, it is possible to properly bond the rubber strips T to each other. Also, it is possible to uniformly press in the entire length, and it is possible to reduced the air reservoir. Further, the second layer 12 has a half thickness of the conventional single layer tread rubber G, it is possible to efficiently extrude the air and connect between the rubber strips T by pressing.

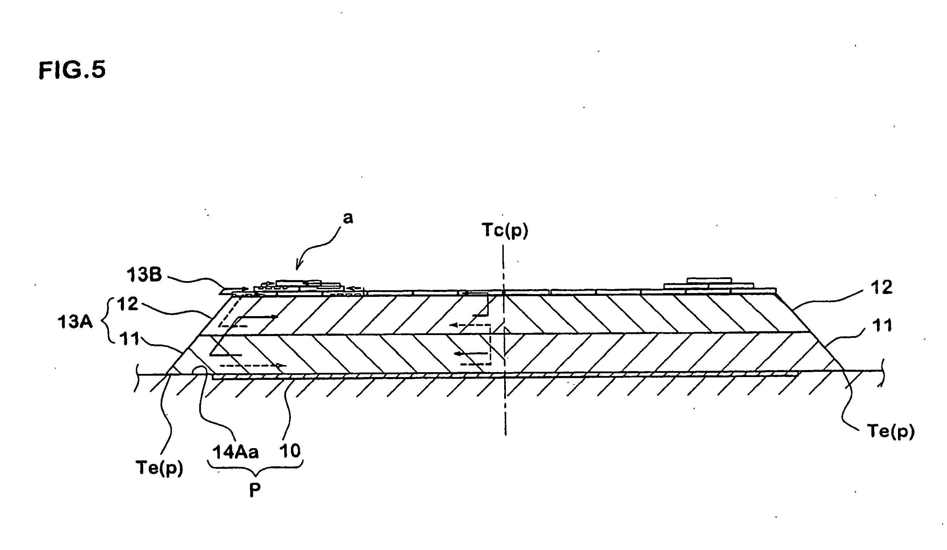

Fig. 5 shows a further embodiment. In the embodiment, a bulge portion a of a shoulder portion is formed by setting an additional layer 13B forming the bulge portion a of the shoulder portion, in addition to a base portion 13A constituted by the first layer 11 and the second layer 12.

The base portion 13A is formed on the basis of each of the embodiments mentioned above. In Fig. 5, the first layer 11 is wound from the starting point corresponding to the center position Tc are shown by a solid line arrow. At this time, it reaches the center position Tc after being folded back at the outer edge Te. Further, it is possible to form the additional layer 13B forming the bulge portion a of the shoulder portion by folding back to the outer edge Te, for example, by one layer thickness, and thereafter repeating at a plurality of times.

Further, the case that the starting point of the first layer 11 is set to the outer edge Te is shown by a broken arrow. At this time, it reaches the outer edge Te of the second layer 12 after being folded back at the center position Tc, and the base portion 13A is constituted. Further, the additional layer 13B forming the bulge portion a of the shoulder portion is formed by folding back at the outer edge Te, for example, by one layer thickness and may be thereafter repeated at a plurality of times.

As mentioned above, in the case shown in Fig. 5, it is possible to uniformly press each of the first layer 11, the second layer 12 and the additional layer 13B by the pressing roller RT (except a part of the buttress portion 2A). Accordingly, it is possible to form the tread rubber G1. As mentioned above, in the case shown in Figs. 2, 3 and 7, it is possible to execute the uniform pressing by using the pressing roller RT. Further, it is possible to make the outer surface smooth, and it is possible to form the tread rubber G1 having no air reservoir. In this case, it is possible to manufacture the other various rubber members than the tread rubber G1.

The description is given above of the embodiments in accordance with the present invention, however, the present invention can be applied to the other rubber strips having the other cross sectional shapes than the rectangular shape in correspondence to the performance demanded for the tire. Further, various materials can be employed as the rubber strip. The present invention is particularly preferable for the pneumatic tire for the passenger car, however, it goes without saying that the present invention can be applied to various tires such as tires for a motor cycle, a truck, a bus and the like, in addition to the tire for the passenger car.

### Examples

There is manufactured a tread rubber G1 of a pneumatic radial tire for a passenger car on the basis of a tire size of 215/45ZR17 and a specification shown in Table 1. A test is executed about a performance thereof. In this case, a rubber strip is set to be identical. Results thereof are shown in Table 1. In the tested specification, Figs. 2 and 3 are set to an example 1, Fig. 7 is set to a comparative example 1, and Fig. 8 is set to a comparative example 2.

**Table 1**

| | Example 1 | | Comparative Example 1 | Comparative Example 2 |
|---|---|---|---|---|
| Specification | Figs. 2 and 3 | | Fig. 7 | Fig. 8 |
| Rubber strip width × thickness (mm) | 15×1 | | 30×1 | 30×1 |
| Uniformity RFV (N) | 52 | | 59 | 57 |

Twenty tires are manufactured for each of the tires, and a uniformity is measured. The uniformity is measured as a radial force variation (RFV) on the basis of a uniformity test condition of JASO C607:2000. An evaluated speed is set to 10 km/h. Results are expressed by an average (N) of twenty tires, and the smaller the numerical value is, the better the result is.

## Claims

1. A method for manufacturing a rubber member (G) for a tire (1), the rubber member (G) composed of a radially inner rubber layer (11A, 11B) and a radially outer rubber layer (12A, 12B) thereon, the method comprising:
forming the rubber member (G) by spirally winding two ribbon-shaped unvulcanized rubber strips (T) around a winding region (Lh, Lh) of a cylindrical wound body (14),
**characterized by**
forming the radially inner rubber layer (11A, 11B) by spirally winding the two rubber strips (T) from two respective starting points corresponding to axial outer edges (Te) of the winding region (Lh, Lh), respectively, to an axial center position (Tc) between the axial outer edges (Te), and
forming the radially outer rubber layer (12A, 12B) by spirally winding said two rubber strips (T) successively from said axial center position (Tc) to the respective starting points corresponding to the axial outer edges (Te).

2. The method of manufacturing a rubber member (G) for a tire (1) as claimed in claim 1, wherein a compounded rubber of said plurality of rubber layers (11A, 11B; 12A, 12B) is identical.

3. The method of manufacturing a rubber member (G) for a tire (1) as claimed in claim 1, wherein the second layer (12A, 12B) is formed by being folded back at the center position (Tc) so as to be wound to the respective outer edges (Te).

4. The method of manufacturing a rubber member (G) for a tire (1) as claimed in claim 1, wherein said rubber member (G) is a tread rubber (G1), the first layer (11A, 11B) is constituted by a rubber layer having a flat thickness, and the second layer (12A, 12B) is spirally wound in such a shape as to have a similar thickness change to a shape of the tread rubber member (G1) in a green tire.

5. The method of manufacturing a rubber member (G) for a tire (1) as claimed in claim 1, wherein said wound body (14) is constituted by a former (14) in which a band (10) of a tread reinforcing body is wound in an outermost side in a radial direction, and a surface-finish portion (14Aa) attaching a rubber strip leading end to the former (14) is formed on a surface of said former (14) protruding outside from said band (10) in the axial direction.

6. The method of manufacturing a rubber member (G) for a tire (1) as claimed in claim 1, wherein said rubber member (G) is structured such that an additional layer (13B) formed on an outermost side in a radial direction forms a bulge portion (a) bulging outward in a radial direction in a shoulder portion of a tread rubber (G1).

7. The method of manufacturing a rubber member (G) for a tire (1) as claimed in claim 1, wherein said rubber strips (T) are pressed in a region capable of being pressed by using pressing rollers (RT) having a long straight rod shape having a uniform diameter and capable of moving close to and away from the wound body (14) in parallel, at a time of winding.

## Patentansprüche

1. Verfahren zum Herstellen eines Kautschukelements (G) für einen Reifen (1), wobei das Kautschukelement (G) aus einer radial inneren Kautschukschicht (11A, 11 B) und einer radial äußeren Kautschukschicht (12A, 12B) darauf gebildet wird, wobei das Verfahren umfasst, dass:
das Kautschukelement (G) gebildet wird, indem zwei bandförmige unvulkanisierte Kautschukstreifen (T) spiralförmig um einen Wickelbereich (Lh, Lh) eines zylindrischen Wickelkörpers (14) gewickelt werden,
**dadurch gekennzeichnet, dass**
die radial innere Kautschukschicht (11A, 11B) gebildet wird, indem die zwei Kautschukstreifen (T) von zwei jeweiligen Startpunkten, die jeweils axial äußeren Kanten (Te) des Wickelbereichs (Lh, 1h) entsprechen, jeweils zu einer axialen mittleren Position (Tc) zwischen den axialen äußeren Kanten (Te) gewickelt werden, und
die radial äußere Kautschukschicht (12A, 12B) gebildet wird, indem die zwei Kautschukstreifen (T) nacheinander spiralförmig von der axialen mittleren Position (Tc) zu den jeweiligen Startpunkten, die den axialen äußeren Kanten (Te) entsprechen, gewickelt werden.

2. Verfahren zum Herstellen eines Kautschukelements (G) für einen Reifen (1) nach Anspruch 1,
wobei ein gemischter Kautschuk der mehreren Kautschukschichten (11A, 11B; 12A, 12B) identisch ist.

3. Verfahren zum Herstellen eines Kautschukelements (G) für einen Reifen (1) nach Anspruch 1,
wobei die zweite Schicht (12A, 12B) gebildet wird, indem sie an der mittleren Position (Tc) umgelegt wird, sodass sie zu den jeweiligen äußeren Kanten (Te) gewickelt wird.

4. Verfahren zum Herstellen eines Kautschukelements (G) für einen Reifen (1) nach Anspruch 1,
wobei das Kautschukelement (G) ein Laufflächenkautschuk (G1) ist, die erste Schicht (11A, 11B) durch eine Kautschukschicht mit einer flachen Dicke gebildet wird, und die zweite Schicht (12A, 12B) in eine solche Form spiralförmig gewickelt wird, dass sie eine ähnliche Dickenänderung wie eine Form des Laufflächenkautschukelements (G1) in einem Rohreifen aufweist.

5. Verfahren zum Herstellen eines Kautschukelements (G) für einen Reifen (1) nach Anspruch 1,
wobei der Wickelkörper (14) durch eine Aufbautrommel (14) gebildet wird, in der ein Band (10) aus einem Laufflächenverstärkungskörper an einer äußersten Seite in einer radialen Richtung gewickelt wird, und ein Oberflächen-Fertigstellungsabschnitt (14Aa), der ein vorderes Ende eines Kautschukstreifens an der Aufbautrommel (14) anbringt, auf einer Oberfläche der Formungseinrichtung (14) gebildet wird, wobei er von dem Band (10) in der axialen Richtung nach außen vorsteht.

6. Verfahren zum Herstellen eines Kautschukelements (G) für einen Reifen (1) nach Anspruch 1,
wobei das Kautschukelement (G) derart aufgebaut ist, dass eine zusätzliche Schicht (13B), die auf einer äußersten Seite in der radialen Richtung gebildet wird, einen Aufwölbungsabschnitt (a) bildet, der sich in einem Schulterabschnitt eines Laufflächenkautschuks (G1) in einer radialen Richtung nach außen aufwölbt.

7. Verfahren zum Herstellen eines Kautschukelements (G) für einen Reifen (1) nach Anspruch 1,
wobei die Kautschukstreifen (T) in einem Bereich gepresst werden, der unter Verwendung von Druckwalzen (RT) gepresst werden kann, die eine Form eines langen geraden Stabes mit einem gleichmäßigen Durchmesser aufweisen, und die in der Lage sind, sich zum Zeitpunkt des Wickelns parallel zu dem Wickelkörper (14) hin und von diesem weg zu bewegen.

## Revendications

1. Procédé de fabrication d'un élément en caoutchouc (G) pour un pneumatique (1), l'élément en caoutchouc (G) étant composé d'une couche de caoutchouc radialement intérieure (11A, 11B) et d'une couche de caoutchouc radialement extérieure (12A, 12B) sur elle-même, le procédé comprenant les étapes consistant à :
former l'élément caoutchouc (G) par enroulement en spirale de deux bandes de caoutchouc non vulcanisé en forme de rubans (T) autour d'une région d'enroulement (Lh, Lh) d'un corps cylindrique bobiné (14),
**caractérisé par** les étapes consistant à :
former la couche de caoutchouc radialement intérieure (11A, 11B) en enroulant en spirale les deux bandes de caoutchoucs (T) depuis deux points de départ respectifs correspondants aux bordures axiales extérieures (Te) de la région d'enroulement (Lh, Lh), respectivement, vers une position axiale centrale (Tc) entre les bordures axiales extérieures (Te), et
former la couche de caoutchouc radialement extérieure (12A, 12B) en enroulant en spirale lesdites deux bandes de caoutchouc (T) successivement depuis ladite position axiale centrale (Tc) vers les points de départ respectifs correspondants aux bordures axiales extérieures (Te).

2. Procédé de fabrication d'un élément en caoutchouc (G) pour un pneumatique (1) selon la revendication 1, dans lequel un mélange de caoutchouc de ladite pluralité de couches en caoutchouc (11A, 11B ; 12A, 12B) est identique.

3. Procédé de fabrication d'un élément caoutchouc (G) pour un pneumatique (1) selon la revendication 1, dans lequel la seconde couche (12A, 12B) est formée en étant repliée vers l'arrière à la position centrale (Tc) de façon à être enroulée vers les bordures extérieures respectives (Te).

4. Procédé de fabrication d'un élément en caoutchouc (G) pour un pneumatique (1) selon la revendication 1, dans lequel ledit élément de caoutchouc (G) est un caoutchouc (G1) pour la bande de roulement, la première couche (11A, 11B) est constituée par une couche de caoutchouc ayant une épaisseur plane, et la seconde couche de caoutchouc (12A, 12B) est enroulée en spirale sous une forme telle qu'elle présente un changement d'épaisseur similaire à la forme d'un élément de caoutchouc (G1) pour la bande de roulement d'un pneumatique cru.

5. Procédé de fabrication d'un élément caoutchouc (G) pour un pneumatique (1) selon la revendication 1, dans lequel ledit corps bobiné (14) est constitué par un élément de mise en forme (14) dans lequel est enroulée une bande (10) d'un corps de renforcement pour la bande de roulement, dans un côté tout à fait extérieur dans une direction radiale, et une portion de finition de surface (14Aa) qui attache une extrémité d'amorce de la bande en caoutchouc à la précédente (14) est formée sur une surface dudit élément de mise en forme (14) en projection à l'extérieur de ladite bande (10) dans la direction axiale.

6. Procédé de fabrication d'un élément en caoutchouc (G) pour un pneumatique (1) selon la revendication 1, dans lequel ledit élément en caoutchouc (G) est structuré de telle façon qu'une couche additionnelle (13B) formée sur un côté tout à fait extérieur dans une direction radiale forme une portion en renflement (a) renflée vers l'extérieur dans une direction radiale dans une portion d'épaulement d'un caoutchouc (G1) pour la bande de roulement.

7. Procédé de fabrication d'un élément caoutchouc (G) pour un pneumatique (1) selon la revendication 1, dans lequel lesdites bandes en caoutchouc (T) sont pressées dans une région capable d'être pressée, en utilisant des galets de pressage (RT) ayant la forme d'une tige droite allongée avec un diamètre uniforme et capable de se déplacer en rapprochement et en éloignement du corps bobiné (14) parallèlement au moment de l'enroulement.
